# EUROPEAN PATENT SPECIFICATION

(11) **EP 1 311 391 B1**
(45) Date of publication and mention of the grant of the patent: **13.08.2008**
(21) Application number: 01956505.0
(22) Date of filing: 27.06.2001
(51) Int. Cl.: B32B 27/32, B65D 65/40, C08J 5/12

(54) **HEAT SEALING POLYOLEFINS**
HEISSSIEGELBARE POLYOLEFINE
POLYOLEFINES DE THERMOSCELLAGE

(30) Priority: 04.07.2000 EP 00202334
(43) Date of publication of application: 21.05.2003
(73) Proprietor: TOTAL PETROCHEMICALS RESEARCH FELUY, 7181 Seneffe (Feluy) (BE)
(72) Inventor: DEMAIN, Axel, B-1457 Tourinnes-Saint-Lambert (BE)
(74) Representative: Leyder, Francis
(86) International application number: PCT/EP2001/007311
(87) International publication number: WO 2002/002322

(56) References cited:
- EP-A- 0 484 817
- WO-A-00/29211
- US-A- 5 985 426
- DATABASE WPI Section Ch, Week 199551 Derwent Publications Ltd., London, GB; Class A17, AN 1995-400309 XP002152278 & JP 07 276585 A (TORAY IND INC), 24 October 1995 (1995-10-24)
- DATABASE WPI Section Ch, Week 199542 Derwent Publications Ltd., London, GB; Class A17, AN 1995-325236 XP002152279 & JP 07 223303 A (MITSUI TOATSU CHEM INC), 22 August 1995 (1995-08-22)
- DATABASE WPI Section Ch, Week 199747 Derwent Publications Ltd., London, GB; Class A17, AN 1997-507711 XP002152280 & JP 09 239927 A (KOHJIN CO LTD), 16 September 1997 (1997-09-16)
- DATABASE WPI Section Ch, Week 200013 Derwent Publications Ltd., London, GB; Class A17, AN 2000-140470 XP002152281 & JP 2000 005276 A (SHINSOZAI SOGO KENKYUSHO KK), 11 January 2000 (2000-01-11)
- DATABASE WPI Section Ch, Week 199950 Derwent Publications Ltd., London, GB; Class A17, AN 1999-585473 XP002152282 & JP 11 255252 A (GIFU PLASTIC KOGYO KK), 21 September 1999 (1999-09-21)
- DATABASE WPI Section Ch, Week 199541 Derwent Publications Ltd., London, GB; Class A17, AN 1995-316717 XP002152283 & JP 07 214736 A (MITSUI TOATSU CHEM INC), 15 August 1995 (1995-08-15)

## Description

The present invention relates to a method of sealing together polyolefin elements by heat sealing. The invention further relates to a package comprising a container body and a closure for the container body and heat sealed thereto. The invention yet further relates to a flexible pouch comprising two films heat sealed together. The invention yet relates to multi-layer polyolefin films.

It is known to heat seal polymers together, in particular for the manufacture of packaging. The strength of the seal varies depending upon the particular packaging application. The seal can range from strong and permanent to weak and temporary. For some packagings, it is desirable to produce a peelable seal between two films or between a closure and a container body. In this specification, a peelable seal means that the seal can be disrupted or broken by exerting a tensile or shear stress on one or two parts of the seal without breaking the parts. In the production of such peelable seals it is desirable to impart to the seal the required strength so that the seal is sufficiently strong for sealing the packaging during use, but sufficiently weak so that the seal can readily be broken by peeling as and when required by a user.

Films made from some polymers are sometimes difficult to seal reliably so as to achieve the desired seal. Moreover, when the polymers can be sealed, the strength of the seal is dependent on the sealing temperature, which usually lies in a very narrow range of temperatures, typically from 2 to 5°C. Too low a sealing temperature results in very poor strength seals, whereas too high a sealing temperature results in brittle seals. The provision of such a very narrow range of temperatures not only makes it difficult to tailor the strength of the seal over a range of potential strengths but also means that the achievement of the required seal is sometimes difficult to obtain reliably.

In the manufacture of heat seals, a number of techniques are known to produce seals from two different polyolefins, namely polypropylene and polyethylene, which are generally difficult to seal together. It is known that polypropylene and polyethylene are physico-chemically semi-compatible or incompatible which renders them difficult to seal together. This physico-chemical incompatibility results in a substantial absence of mutual entanglement of polyethylene and polypropylene polymer chains when submitted to pressure in the molten state, in the case for example of heat sealing films under pressure or blending polymers in an extruder. For example, it is known to blend a semi-compatible or incompatible polymer such as polyethylene into polypropylene to define a two phase system. This blend can be sealed to a material made of polyethylene. In general, the compatibility, and hence the strength of the seal, of polyethylene with polypropylene increases when the amount of comonomer in the polyethylene increases. In addition, in general linear low density polyethylenes (LLDPE) are more compatible with polypropylene than low density polyethylenes (LDPE). It is further known that the compatibility of an alpha-olefin propylene copolymer with polyethylene can be improved if the amount of comonomer in the propylene copolymer increases. Furthermore, the blending of random alpha-olefin propylene copolymers into homopolymer polypropylene improves the sealing compatibility of the polypropylene with polyethylene. In addition, ionomers can be blended into polypropylene to improve the sealing compatibility with polyethylene, for example the ionomer may comprise the material known as Surlyn (registered trade mark) made and sold by the company Du Pont de Nemours.

Despite these known techniques, there is still a need in the art for heat sealing methods which enable the strength of the heat seal to be tailored over a broad range. There is also a need in the art for the heat sealing method to be able to employ a broad range of heat seal temperatures which may readily be implemented into mass production for achievement of reliable seals of required strength. There is further a need in the art for enhancing the heat seal compatibility of polyolefins, in particular polyethylene and polypropylene. There is yet further a need in the art for a heat sealing method which enables the strength in the seal readily to be tailored to provide a seal strength varying from a peelable seal to a strong seal. There is a further need for a means to improve the physico-chemical compatibility of polyethylene and polypropylene in compounded blends of such polymers.

It has also been known in the art to provide multi-layer polyolefin films comprised of layers of polypropylene and polyethylene whereby the different materials for the different layers impart different characteristics to the multi-layer films. For example, a multi-layer film is known comprising a polypropylene layer with one or more adjacent layers of low density polyethylenes. The layers are bonded together by adhesive polymers disposed between the layers. However, such films have not been commercially successful since they require the additional adhesive layers. Linear low density polyethylene (LLDPE) and more recently, very low density polyethylene films (VLDPE) which have been polymerised using metallocene catalysts have been applied as heat sealing layers to a polypropylene core layer. The polypropylene layer provides good rigidity to the multi-layer film, optionally coupled with good heat shrinkage properties, and the outer very low density polyethylene layers or LLDPE enable the multi-layer film to be heat sealed. However, these films have a low thermal stability causing failure of the heat seal. The VLDPE layers are also tacky to the touch, which is undesirable for some applications.

There is therefore a further need in the art for multi-layer polyolefin film comprising layers of polypropylene and polyethylene which do not require such adhesive polymers.

The Derwent Abstract of JP-A-07-276585 discloses a biaxial oriented polypropylene film comprised of a polypropylene base layer laminated on one side by either a syndiotactic polypropylene layer or a syndiotactic polypropylene and isotactic polypropylene layer and on the other side by a heat sealing layer.

The Derwent Abstract of JP-A-07-223303 relates to polypropylene laminated film comprised of a lamination material layer to at least one side of a base layer made of isotactic polypropylene. The lamination material layer contains as a major component a syndiotactic polypropylene homopolymer or a syndiotactic polypropylene copolymer.

The Derwent Abstract of JP-A-09-239927 discloses a laminated stretch shrink film comprising at least three layers. The core layer contains a mixture of 30-80wt% of a crystalline polypropylene and 20-70wt% of a syndiotactic polypropylene whereas the innermost and outermost layers contain a mixture of 10-60wt% of an ethylene/alpha olefin copolymer with 40-90wt% of a polyethylene, each having a respective density range and the density of the polyethylene being higher than that of the copolymer.

EP-A-0484817 discloses a polyolefin heat-sealable packaging film comprising an isotactic polypropylene base layer and at least one top layer comprising a copolymer of an alpha-olefin having 2 to 8 carbon atoms and a syndiotactic polypropylene. The copolymer may have a propylene content of more than 70wt% relative to the total weight of the copolymer. The propylene content may possess an isotacticity of less that 15%. The mean length of sequence of the syndiotactic sequences may be greater than about 20.

The Derwent Abstract of JP-A-11-255252 relates to a lid for an air tight container. The lid has a soft circumference part made of synthetic resin containing ethylene-butadiene rubber and 85-95wt% syndiotactic polyethylene. The main body of the lid is made of synthetic resin containing 5-15wt% polypropylene and syndiotactic polypropylene. The soft circumference part is integrated with the main body via a fitting groove in the soft circumference part.

US-A-5,985,426 discloses a packaging film having a surface providing improved release properties from cold seal cohesives. The multi-layer polyolefin film includes a skin layer which comprises at least 99.1wt% of one polymer selected from the group consisting of linear low density polyethylene, ethylene-butene plastomer, syndiotactic polypropylene homopolymer, and high density polyethylene.

The Derwent Abstract of JP-A-07-214736 relates to a syndiotactic polypropylene resin composition which is laminated on the outside of an isotactic polypropylene blow-moulded base material. The composition comprises 20-80wt% crystalline polypropylene with 0.6 or more syndiotactic pentad proportion and 80-20wt% copolymer of propylene and alpha-omega diene.

US-A-5985426 discloses a coextruded film comprising a core layer of isotactic polypropylene blended with high density polyethylene. The film further comprises a skin layer comprising at least 99.1 wt % of a material which is selected from a list comprising syndiotactic polypropylene. The skin layer further comprises up to 3000 ppm high density polyethylene.

WO-A-00/29211 discloses a multilayer polyolefin laminate film where syndiotactic polypropylene is used in at least one non-outer layer together with a least two layers of an interpolymer of ethylene and at least one C₃-C₂₀ alpha olefin. The syndiotactic polypropylene has a density of from 0.89 to 0.90gm/cc, a melt index of from 0.5 to 2.0 dg/min and at least about 60% rrrr pentads measured using NMR. The film is disclosed for use in making a pouch for containing a flowable material for use in a vertical form fill seal packaging.

It is known to produce a flexible medical pouch composed of two plastics films which are heat sealed together around their periphery with the pouch containing medical fluids, for example intravenous feeds, dialysis solutions, etc. The pouch is a multi-compartment package and adjacent compartments are separated by an internal seal which may be ruptured on squeezing the package when it is desired to mix the two fluids in the compartments together. The known medical pouch comprises polyolefin films blended with other materials, for example styrene-butadiene-styrene (rubbers), for achieving flexibility of the films. This known pouch suffers from the disadvantage that multiple materials are required to form the pouch, which increases the cost and also reduces the recyclability of the pouch. In addition, the seals can rupture inadvertently.

The Derwent Abstract of JP-A-2000-005276 relates to a resin medical container having a number of chambers separated by a peelable seal located on heat-sealable adhesive portions of the container. The wall of the container is composed of a base layer, and the innermost inner layer comprises a resin mixture consisting of (A) syndiotactic polypropylene or propylene-ethylene random copolymer and (B) isotactic polypropylene at a ratio of 50:50 to 90:10 by weight. These containers are stated to keep transparency and flexibility even when heated at high temperature.

There is a yet further need in the art for an improved medical pouch and manufacturing method.

The present invention aims to provide these needs in the art.
1. Accordingly, the present invention provides a method of sealing together polyolefin elements, the method comprising providing a first element including a a polyethylene and a second element including an isotactic polypropylene, and at least one of the first and second elements further including from 25 to 75 wt% syndiotactic polypropylene, and heat sealing the first and second elements together.

Preferably, the first and second elements include, respectively, polyethylene and isotactic polypropylene.

In one preferred aspect the first element is composed of a blend of from 25 to 75 wt% polyethylene and from 75 to 25 wt% syndiotactic polypropylene and the second element is composed of isotactic polypropylene.

In another preferred aspect the first element is composed of polyethylene and the second element is composed of a blend of from 25 to 75 wt% isotactic polypropylene and from 75 to 25 wt% syndiotactic polypropylene.

In yet another preferred aspect the first element is composed of a blend of from 25 to 75 wt% polyethylene and from 75 to 25 wt% syndiotactic polypropylene and a second element is composed of a blend of from 25 to 75 wt% isotactic polypropylene and from 75 to 25 wt% syndiotactic polypropylene.

The first and second elements may form a packaging when sealed together.

Preferably, the first and second elements comprise, in either order, a container body and a closure for the container body.

Alternatively, the first and second elements may comprise a flexible pouch. Preferably, the flexible pouch has at least two heat seals of different seal strength, the at least two heat seals comprising a first peripheral heat seal around the pouch and a second internal heat seal separating two compartments in the pouch, the second heat seal being weaker than the first heat seal and being rupturable for connecting to two compartments together.

Yet more preferably, the first seal is formed at a higher sealing temperature than that of the second heat seal.

In a yet further aspect, the first and second elements are films which are heat sealed together to form a multi-layer film. The heat sealing may be achieved by coextrusion of the films.

The present invention further provides a package comprising a container body and a closure for the container body and heat sealed thereto, the container body being formed of a first polyolefin selected from at least one of polyethylene and isotactic polypropylene and the closure being formed of a second polyolefin selected from at least one of polyethylene and isotactic polypropylene, at least one of the first and second polyolefins further including from 25 to 75 wt% syndiotactic polypropylene.

The present invention still further provides a flexible pouch comprising two polyolefin films heat sealed together by a first peripheral heat seal around the pouch and a second internal heat seal separating two compartments in the pouch, the second heat seal being weaker than the first heat seal so as to be rupturable for connecting the two compartments together, the two polyolefin films being composed of an isotactic polypropylene blended with from 25 to 50 wt% syndiotactic polypropylenes.

Preferably, the two polyolefin films are composed of an isotactic polypropylene blended with from 30 to 45 wt% syndiotactic polypropylene.

The present invention still further provides a multi-layer film comprising at least one first film of polyethylene heat sealed to at least one second film of a blend of isotactic polypropylene, at least one of the first and second films further including syndiotactic polypropylene. The heat sealing may be achieved by coextrusion of the films.

Preferably, the second film is a blend of from 75 to 60 wt% isotactic polypropylene and from 25 to 40 wt% syndiotactic polypropylene.

More preferably, two of the first films are heat sealed to opposed surfaces of the second film so as to form opposed coating layers therefor.

The present invention also provides the use of syndiotactic polypropylene as a heat seal promoter between two polyolefin elements.

The reason that sPP is believed to act as a heat seal promoter between two polyolefin elements is explained hereinbelow. Without being bound by theory it is believed that syndiotactic polypropylene is typically physico-chemically semi-compatible with polyethylene and polypropylene. This means that polymer chains of sPP have a tendency to entangle with polyethylene or polypropylene polymer chains when submitted to pressure in the molten state as in the case for example when heat sealing films under pressure or blending polymers in an extruder. Moreover, when sPP is blended into polyethylene or polypropylene, the sPP polymer chains are more easily entangled with other sPP chains instead of polyethylene or polypropylene chains. Hence, sPP has a tendency to form a two phase blend with good adhesion between the two phases. As a consequence, when sPP is blended with either polyethylene or polypropylene, the sPP will facilitate heat sealing of the blend on polypropylene or polyethylene respectively by creating entanglements of the sPP polymer chains with both of these polymers. Obviously, the presence of sPP in two different blends of sPP with polyethylene and polypropylene respectively will further facilitate heat sealing.

In accordance with the present invention, the polyethylene (PE) may comprise very low density polyethylene (VLDPE) linear low density polyethylene (LLDPE), low density polyethylene (LDPE), medium density polyethylene (MDPE) or high density polyethylene (HDPE) having the following density ranges: below 0.88 g/cm³ for VLDPE; 0.88 to 0.950 g/cm³ for LLDPE; 0.90 to 0.925 g/cm³ for LDPE; 0.920 to 0.940 g/cm³ for MDPE; and 0.935 to 0.970 g/cm³ for HDPE. The polyethylene may comprise a blend of two or more of these polyethylenes. The HDPE may be a homopolymer or a copolymer with an alpha-olefin as the comonomer, the alpha-olefin having from 3 to 10 carbon atoms. In the LLDPE, LDPE and MDPE, the comonomer is an alpha-olefin having from 3 to 10 carbon atoms, and may comprise for example 4-methyl pentene. The polyethylene may be made using any known catalytic process, for example using a chromium oxide based catalyst, a Ziegler-Natta catalyst or a metallocene catalyst.

The isotactic polypropylene may be mono or multi-modal, and may be a homopolymer or a random copolymer where the comonomer is an alpha-olefin having from 2 or from 4 to 10 carbon atoms, or a terpolymer where the comonomers are alpha-olefins having 2 or from 4 to 10 carbon atoms. Alternatively, the isotactic polypropylene may be a blend of one or several homopolymer and/or copolymer and/or terpolymer polypropylenes. The polypropylene polymers may be produced either from Ziegler-Natta or metallocene catalysts.

The syndiotactic or terpolymer polypropylene (sPP) may be a homopolymer or a random copolymer or a terpolymer where the comonomer is an alpha-olefin having 2 or from 4 to 10 carbon atoms. The sPP can be mono or multi-modal. The sPP may comprise a blend of different syndiotactic polypropylenes.

In accordance with the invention, when two polyolefin elements are to be sealed together, in order to increase the heat seal compatibility between the two elements, sPP is incorporated into one or both of the elements in a range of from 25 to 75 wt% polypropylene, yet more preferably from 30 to 60 wt% sPP.

The strength of the seal between the two parts to be heat sealed together where one part is made of sPP/PE, sPP/PP or sPP/PE/PP and the other part is made of sPP/PE; sPP/PP; sPP/PE/PP; PP/PE; PP or PE can be tailored over a broad range of strength by adjusting the composition of the blends in particular by varying the sPP amount(s). With the blends of the invention, it is possible to tailor the strength of the seal over a broad range of strength by adjusting the composition of the blends in particular by varying the sPP amounts. Moreover, for each given blend, the range of temperatures that can be used to heat seal is broader than with copolymers not having sPP blended therewith. The heat seal temperature of blends containing polypropylene is lowered when sPP is incorporated into the blend.

This provides manufacturing advantages such as shorter sealing time thus allowing productivity increase through a larger number of seals per unit time, or a reduced energy consumption.

The sPP acts as a heat seal promoter and compatabiliser between polyethylene and polypropylene. Thus the blending of sPP allows polymers to be sealed together that otherwise would be very difficult to seal together.

For some applications, the optical properties of the polyolefin layers are important. The optical properties of layers containing sPP are not altered compared to the same material without sPP for sPP concentrations below about 30 wt%.

The blends employed in accordance with the invention may be used to produce not only films, but also any other type of parts such as cups, buckets, containers, etc. The parts can be produced by, for example, extrusion processes used to make films, sheets, fibres, etc.; extrusion thermoforming processes, injection moulding, etc. The blends of the invention in particular allow the production of multi-layer films with adjacent layers made of polymers that are reliably heat sealed together, but otherwise would usually delaminate from each other without the use of sPP in the blend in accordance with the invention. The polyolefin elements to be sealed together in accordance with the invention may be used in a variety of different applications, but most particularly have use as packaging materials. The packaging materials can be films, containers, boxes, etc.

For example, the polyolefin elements may comprise a sealing film, for example of polypropylene, and a container, for example of polyethylene, either or both of which include sPP blended therein. Alternatively, the polyolefin elements may comprise a polypropylene container and a polyethylene sealing film, either or both of which may incorporate sPP blended therein.

In a particular aspect of the invention, the packaging application comprises the production of a medical pouch formed of two polyolefin films heat sealed together. There is formed a strong peripheral seal and a weak internal seal which separates the pouch into two compartments. In use, the pouch is filled with two fluids, for example intravenous solutions which are required to be kept separate until needed for administration to a patient and then mixed when desired. The mixing may be achieved by squeezing the pouch which causes the internal seal to rupture, thereby permitting the two contents of the two pouches to be mixed together. The two films preferably comprise a random ethylene propylene copolymer blended with from 25 to 50 wt% sPP, more preferably from 30 to 45 wt%. By heat sealing the peripheral seal at a higher temperature than that employed for the internal seal, the internal seal can be made weaker than the peripheral seal, and thereby be permitted to rupture on squeezing of the pouch, without any danger of rupture of the peripheral seal. This provides a medical pouch for fluids which is composed completely of polyolefins.

In accordance with a preferred aspect of the invention, the range of temperatures through which the blends can be sealed is the broadest when the sPP concentration ranges from 25 to 75 wt% in the relevant olefin element. Typical seal temperatures depend on the concentrations in the blends and the characteristics of the sealing technique. The present invention is not limited to heat sealing using not only heat but also pressure. For example, co-extrusion (for example of films), laser or high frequency (induction) heat sealing may also be employed as heat sealing processes in accordance with the invention.

When the present invention is employed to make packagings, various types of packaging, for example for foodstuffs such as yoghurts, may be made, for example sealed caps, closures, pouches with multiple compartments such as medical pouches or food pouches etc. The invention can also be employed to produce protective packaging and tape, as well as food packaging.

Embodiments of the present invention will now be described, by way of example only, with reference to the accompanying drawings, in which:
Figure 1 is a graph showing a typical relationship between seal strength and sealing temperature for two heat sealable polyolefin elements produced in accordance with an embodiment of the invention and produced in accordance with the prior art;
Figure 2 is a schematic section through a heat seal container comprising a container body and a removable closure heat sealed thereto in accordance with a first embodiment of the present invention;
Figure 3 is a schematic side view of a multi-compartment pouch comprising two films heat sealed together in accordance with a second embodiment of the present invention;
Figure 4 is a schematic section through a multi-layer polyolefin film in accordance with a further embodiment of the present invention;
Figure 5 shows the relationship between tensile strength (represented by a separation force for the seals) and heat seal temperature for polymer seals produced in accordance with the invention and not in accordance with the invention;
Figure 6 further shows the relationship between tensile strength and heat seal temperature for yet further polymer seals in accordance with the invention and not in accordance with the invention; and
Figure 7 shows the yet further relationship between tensile strength and heat seal temperature for yet further polymer seals in accordance with the invention and not in accordance with the invention.

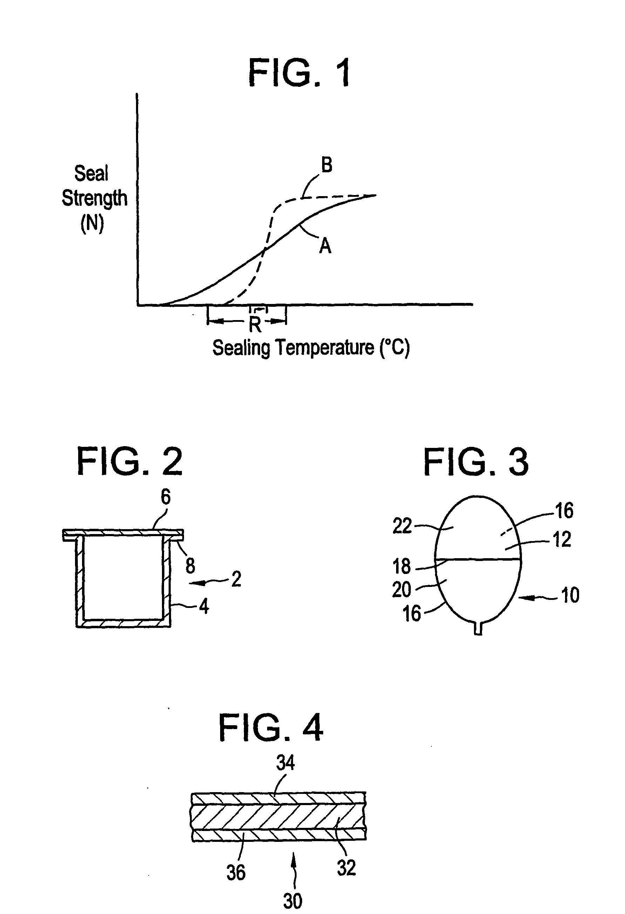

Referring to Figure 1, the graph shows a relationship between the seal strength and the sealing temperature for two polyolefin elements wherein, in accordance with the present invention, at least one of the polyolefin elements incorporates syndiotactic polypropylene in a blend with the polyethylene or isotactic polypropylene of the respective polyolefin element. The relationship between the seal strength and sealing temperature is marked as line A. The line marked B represents the corresponding relationship between the seal strength and the sealing temperature for the corresponding polyolefin elements neither of which incorporates syndiotactic polypropylene and thus the elements have been sealed together by a method not in accordance with the present invention.

It may be seen by comparison of lines A and B that by blending sPP into one or both of the polyolefin elements in accordance with the present invention, the curve representing the relationship between the seal strength and the sealing temperature has a much lower slope. This means not only that the sealing temperature range to achieve a given seal strength is broadened, but also the seal strength can readily be tailored to a desired value.

In accordance with the known heat sealing method represented by plot B, the sealing temperature range to achieve a seal of the required strength, marked as range r in Figure 1, is typically on the order of only a few degrees centigrade, for example 2 to 5°C. In contrast, by blending sPP into one or both of the polyolefin elements, the sealing temperature range is broadened significantly, for example to the value R shown in Figure 1. This greatly enhances the prospect of a reliable seal being achieved, particularly in commercial production. It may also be seen that by sealing at different temperatures, the use of sPP permits seals of differing strength readily to be achieved simply by varying the sealing temperatures. This permits seals of different strength readily to be incorporated into the same product, for example in the medical pouch referred to hereinabove. Since the seal strength varies over a relatively broad sealing temperature range, the sealing temperature can readily be varied so as to enable the desired seal strength to be achieved in a controlled fashion. Plot A of Figure 1 only represents a single composition. It is possible to adjust the composition of a blend to vary the slope of the line, thereby to enable the strength of the seal further to be tailored. The same applies to the broadening of the sealing temperature range by adjusting the composition of the blend.

Referring to Figure 2, there is shown a sealed package designated generally as 2 comprising a container body 4 having a removable closure 6 heat sealed thereto around a peripheral upper flange 8 of the container body 4. Such packages are well known, for example for packaging foodstuffs such as yoghurts. The container body 4 may be composed of isotactic polypropylene and the removable closure 6 may be composed of polyethylene, and either or both of the container body and removable closure 6 may be blended with sPP. Alternatively, the container body 4 may be composed of polyethylene and the removable closure 6 may be composed of polypropylene, with either or both of the container body 4 and the removable closure 6 being blended with sPP.

Figure 3 shows an embodiment of a multi-compartment pouch, in particular a medical pouch, in accordance with the invention. The medical pouch, designated generally as 10, comprises two polyolefin films 12,14 which have been heat sealed together to form a peripheral seal 16 around the pouch 10 and an internal seal 18 separating two compartments 20,22 in the pouch 10. In use, the two compartments 20,22 typically comprise liquid products (e.g. aqueous solutions, for example for intravenous use) which are intended to be kept separate until they need to be mixed together for administration to a patient. The internal seal 18 is weaker than the peripheral seal 16 so as to be rupturable upon application of a force to the medical pouch 10, for example by manual squeezing. The two polyolefin films 12,14 are typically each composed of a random ethylene propylene copolymer blended with sPP wherein sPP comprises 25 to 50 wt% in the blend. The peripheral and internal seals 16,18 have been formed by heat sealing the peripheral seal 16 at a higher temperature than that of the internal seal 18. As made clear from Figure 1, the use of a higher sealing temperature when the polyolefins incorporate sPP in accordance with the invention, enables a higher seal strength to be achieved. In this way, the peripheral seal 16 can be provided with a high seal strength which is sufficiently high to prevent rupture of the peripheral seal 16 either inadvertently or when it is intended to rupture the lower strength internal seal 18. Moreover, the internal seal 18 strength can be reliably controlled so that it does not rupture inadvertently prior to use.

In accordance with this embodiment, a medical pouch 10 is provided which not only provides a reliable internal seal, which overcomes the problems of the known medical pouch referred to hereinabove, but also is composed solely of polyolefins, which improves the recyclability of the medical pouch.

Figure 4 shows an embodiment of a multi-layer film produced in accordance with the invention. Referring to Figure 4, the multi-layer film 30, designated generally as 30, comprises a central core layer 32 of isotactic polypropylene sandwiched between two opposed outer layers 34,36 of low density polyethylene. The film 30 is a heat shrinkable film wherein the polypropylene imparts to the multi-layer film 30 not only good rigidity but also optionally good heat shrinkage properties. In accordance with the invention, sPP is blended into the isotactic polypropylene in a preferred amount of from 10 to 40 wt%. The sPP acts as a compatibiliser between the central core layer 32 of isotactic polypropylene and the proposed outer layers 34,36 of low density polyethylene, enabling the sandwich of layers 32,34,36 to be adhered together by heat sealing without requiring an adhesive. The heat sealing is, in this embodiment, achieved by co-extrusion of the layers 32,34,36 of the multi-layer film 30.

Without being bound by theory, it is believed that the sPP acts a heat seal promoter and compatabiliser between two polyolefin elements by the sPP being dispersible in each element. Consequently, on heat sealing, the sPP when present initially in either one or both of the polyolefin elements to be heat sealed together, acts to bond the two elements together. When one polyolefin element is composed of polyethylene and the other polyolefin element is composed of polypropylene, the sPP has a melting temperature between those of the polyethylene and the polypropylene. It is believed, without being bound by theory, that this assists the sPP acting as a heat seal promoter between the two heat sealed polyolefin elements of different compositions.

The present invention will now be described in greater detail with reference to the following non-limiting Examples.

In these Examples, a variety of materials was employed, in particular an LLDPE, an LDPE, an MDPE, an sPP and a random PP, having the respective density, melt index, heat seal temperature and melt temperature shown in Table 1. In this specification, the melt index MI₂ for the polyethylene polymers was measured at 190°C under a load of 2.16 kg according to the procedures of ISO 1133 Condition 4 and the melt index MI₂ for the polypropylene polymers was measured at 230°C under a load of 2.16 kg according to the procedures of ISO 1133 Condition 16.

It is to be noted that for the heat seal temperatures specified in Table 1 the heat seal temperatures are dependent on film thickness. The values specified in Table 1 are for the films used in accordance with this Example and the remaining Examples. The melting temperatures are merely given as an indication since the melting temperature can vary according to the grades within each family of resins, namely LLDPE, LDPE, etc.. The melting temperature varies most for random polypropylene since this is dependent on comonomer content, which in turn can vary greatly.

The LLDPE was a product available under the product designation LL18 KFA from the company Montell; the LDPE was a product available under the product designation LB 503 from Fina Oil and Chemical Inc.; the MDPE was a product available under the product designation HF 513 from Fina Oil and Chemical Inc.; the sPP was the product available under the product designation EOD 96-30 from the company Fina Oil and Chemicals Inc.; and the random polypropylene was a product available under the product designation 7425 from Fina Oil and Chemical Inc.

### EXAMPLE 1

In accordance with this Example, 150 micron thick blown films of different polyethylene polymers or blends were heat sealed to each other at two different heat seal temperatures of 145°C and 155°C for a period of 2 seconds under a force of 40 Newtons.

In accordance with this Example, the blown films of LDPE, LLDPE and MDPE were sealed to a film composed of different blends of the sPP and random polypropylene having varying amounts of sPP and random polypropylene in the blends, and the results, using two sealing temperatures for each of the LDPE, LLDPE and MDPE, are shown in Table 2. Table 2 indicates a qualitative rating of the strength of the seal for each of the combination of the 150 micron thick films that were heat sealed to each other at the two different temperatures.

From Table 2, it may be seen in general that an increase in the proportion of sPP in the random PP tends to enhance the seal strength. Moreover, for each of the starting materials LDPE, LLDPE and MDPE, the higher sealing temperature of 155°C tends to provide an improved seal strength as compared to the lower sealing temperature of 145°C. In addition, the LLDPE and the MDPE tend to provide an improved seal under the same conditions as compared to the LDPE.

### EXAMPLE 2

In this Example, the seal strength of films produced from a blend of 60 wt% LDPE and 40 wt% sPP with a second material selected from a blend of 60 wt% LLDPE/40 wt% sPP; random polypropylene; a blend of 85 wt% random polypropylene/15 wt% sPP; a blend of 65 wt% random polypropylene/35 wt% sPP; and a blend of 35 wt% random polypropylene/65 wt% sPP were investigated using varying sealing temperatures. The blends were made by dry blending pellets of the polyolefin components of the blends in the requisite proportions and extruding the blends into around 110 micron thick cast films on a Plasti-Corder (Registered Trade Mark) extruder available from the company Brabender and having a 19 mm diameter screw with a length/diameter ratio of 25. The films were then heat sealed on a Brugger (Registered Trade Mark) heat seal machine at temperatures ranging from 125°C to 145°C under a force of 40 Newtons for a period of 1 second. The strength of the seals was then measured on an Instron tensile tester after a period of 24 hours had elapsed following sealing. The tensile strength results are shown in Table 3. The tensile strength is represented by the separation force (in Newtons) of the seals. The tensile strength was the strength of 1.0 cm long seals between the cast films. A tensile strength of 0 means that the seal was peelable, and had a seal separation force of from 0 to 3 Newtons.

The results in Table 3 show that depending on the heat seal temperature and on the materials, the strength of the seal ranged from a peelable seal to a strong seal.

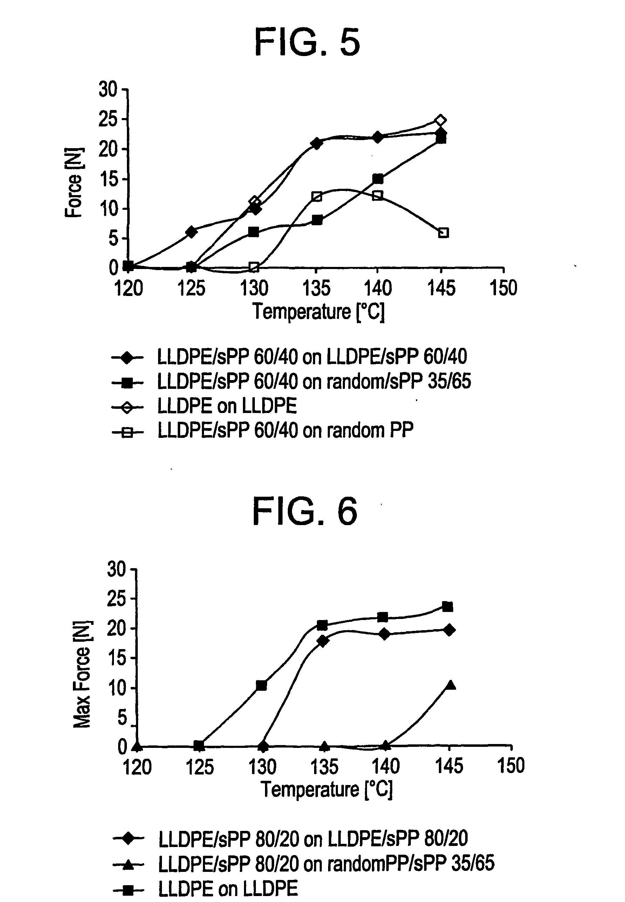

The relationship between the tensile strength and the sealing temperature for the various heat seals formed in this Example is also shown in Figure 5. Figure 5 also shows the relationship between tensile strength and heat seal temperature for other polymer seals not in accordance with the invention.

From Table 3 and Figure 5 it may be seen that when the 60 wt% LLDPE/40 wt% sPP blend is heat sealed onto the same material, this blend can be heat sealed from a temperature of 120°C to achieve a peelable seal. This minimum temperature is around 5°C lower than sealing temperatures achievable with the same pure LLDPE. Using the 60 wt% LLDPE/40 wt% sPP blend, the maximum seal strength is the same as that achievable with the pure LLDPE. As a consequence, by incorporating sPP into the LLDPE, an increase in seal strength can be achieved over a broader range of sealing temperatures.

It may also be seen that the 60 wt% LLDPE/40 wt% sPP can be heat sealed onto pure random polypropylene, giving a peelable seal at sealing temperatures of from 120 to 130°C. At higher sealing temperatures, a stronger seal can be achieved, but this is limited to around 12 Newtons. When the 60 wt% LLDPE/40 wt% sPP is heat sealed onto either the 85 wt% random PP/15 wt% sPP or 65 wt% random PP/35 wt% sPP, only a peelable seal is achieved over the entire sealing temperature range tested. In contrast, when the 60 wt% LLDPE/40 wt% sPP is heat sealed onto a 35 wt% random PP/65 wt% sPP blend, as shown in Figure 5, a peelable seal is achieved at 125°C, whereas a stronger seal is achieved at temperatures of 130°C and above. The seal strength regularly increases from 0 (i.e. peelable) to the same seal strength of the pure LLDPE when the temperature is above 145°C up to 155°C. Accordingly, the incorporation of sPP into the random PP at an amount greater than about 40 wt% sPP in the random PP not only broadens the range of temperatures to which the sealing is performed, but also increases the ultimate seal strength.

In contrast, when the pure LLDPE is heat sealed onto itself, there is a rapid increase of the seal strength from 0 to 21 Newtons when the sealing temperature increases from 125°C. This corresponds broadly to plot B of Figure 1. Over this temperature range, the seal strength keeps increasing with sealing temperatures. In contrast, when the 60 wt% LLDPE/40 wt% sPP is blended onto itself, the plot is similar to plot A of Figure 1 where the increase in ultimate seal strength is substantially the same as that of the pure LLDPE, but seal strengths can be achieved over a broader temperature range.

The pure LLDPE film does not heat seal onto the pure random PP film. It may thus be seen that the incorporation of sPP into the LLDPE to form a blend thereof enables heat sealing of the LLDPE onto the random PP.

### EXAMPLE 3

In accordance with this Example, the seal strength of a second blend comprising 80 wt% LLDPE/20 wt% sPP with a second material over a variety of sealing temperatures was tested. The results are shown in Table 4. As for Table 3, the designation 0 means that a peelable seal was achieved (with a separation force of from 0 to 3 Newtons), but a hyphen means that no seal was made.

The results are also shown in Figure 6.

It may be seen from Table 4 and Figure 6 that the 80 wt% LLDPE/20 wt% sPP blends can be heat sealed to each other at a temperature of from 130°C. This temperature is around 5°C lower than the corresponding sealing temperature for the pure LLDPE and the maximum seal strength is slightly lower than with the pure LLDPE. The 80 wt% LLDPE/20 wt% sPP blend only achieves a peelable seal with the random polypropylene and the 65 wt% random polypropylene/35 wt% sPP blend. On the other hand, the 80 wt% LLDPE/20 wt% sPP blend does heat seal to achieve a strong seal at a temperature above 140°C on the 35 wt% random PP/65 wt% sPP blend. At lower temperatures only a peelable seal is achieved.

### EXAMPLE 4

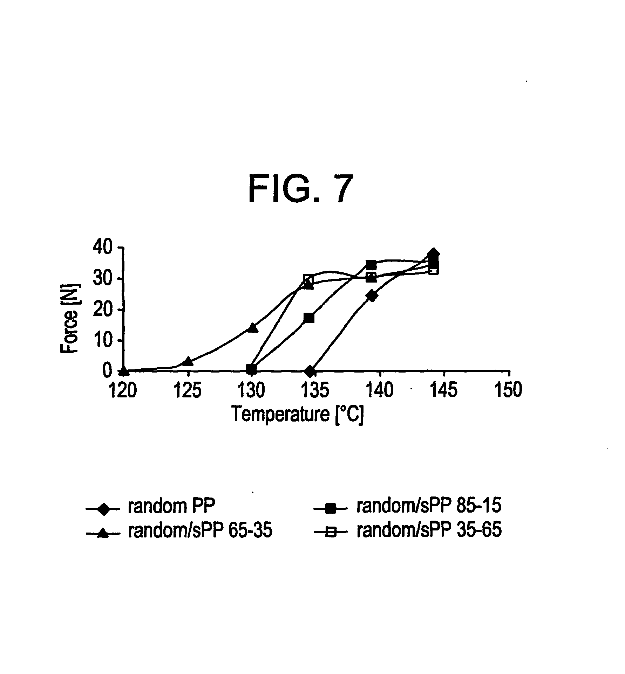

In this Example, the seal strength of the random polypropylene either unblended or blended with various amounts of sPP, with the sealing being to the same material, was tested at various sealing temperatures and the tensile strengths were measured, represented by a seal separation force in Newtons. The results are shown in Table 5 and Figure 7.

The seal strength of the pure random PP rapidly increases from 0 to 37 Newtons over a sealing temperature range of 10°C starting at 135°C. When 15 wt% sPP is blended into the random PP, the sealing curve is shifted to lower temperatures by around 5°C but the heat sealing temperature range is not broadened. When 35 wt% sPP is blended into the random PP, there is a much greater broadening of the sealing temperature range. Very weak (peelable) seals are observed for sealing temperatures between 120 and 125°C. The seal strength then continues to rise rapidly with temperature over a temperature range of 10°C. Thereafter, the strength continues to rise less quickly over another range of 10°C of sealing temperatures. In total, the sealing temperature range extends over 25°C. This is significantly broader than the sealing temperature range of the pure random PP. When 65 wt% sPP is blended into the random PP, the relationship between the tensile strength and the sealing temperature shows a shape reasonably similar to that of the 85 wt% random PP/15 wt% sPP blend, but slightly shifted to lower temperatures.

The amount of sPP incorporated into the polypropylene or polyethylene polymers is preferably such as not significantly to increase the haze of the polymers, for example when the polymers are blown into films. The optical properties of layers containing sPP are not significantly altered compared to the same material without blended sPP for sPP concentrations below about 30 wt%. Table 6 shows the optical properties of both pure LLDPE and random PP, and for blends of LLDPE and random PP with sPP in the stated proportions, for the cast films of around 110 micron thickness. It will be seen that for the LLDPE, the blending of sPP into the LLDPE increases the haze of the material, but the haze is lower at sPP amounts of 20 wt%. For the random PP, the haze is increased for a blend with 15 wt% sPP, but then decreases for increasing amounts of sPP of 35 wt% and 65 wt% to haze values lower than that of the pure random sPP.

**TABLE 1**

| Material | Density (g/cm³) | MI₂ (g/10min) | Heat Seal Temp (°C) | Melt Temp (°C) |
|---|---|---|---|---|
| LLDPE | 0.912 | 1.0 | ~130 | ~120 |
| LDPE | 0.922 | 0.3 | ~104 | ~110 |
| MDPE | 0.934 | 0.2 | ~116 | ~123 |
| sPP | 0.89 | 3.5 | ~100 | 128 |
| Random PP | 0.90 | 3.9 | ~140 | 139 |

**TABLE 2**

| | | sPP/Random PP weight ratio | | | | |
|---|---|---|---|---|---|---|
| Material | Sealing Temp (°C) | 5/95 | 10/90 | 15/85 | 20/80 | 30/70 |
| LDPE | 145 | -- | - | - | = | = |
| LDPE | 155 | - | = | = | = | = |
| LLDPE | 145 | = | = | = | + | + |
| LLDPE | 155 | + | + | + | + | ++ |
| MDPE | 145 | = | = | = | = | + |
| MDPE | 155 | + | + | + | + | ++ |

| | | | | | | |
|---|---|---|---|---|---|---|
| -- represents very poor - represents poor = represents average + represents good ++ represents very good | | | | | | |

**TABLE 3 Seal strength of 60wt% LLDPE/40wt% sPP with second material**

| | Tensile Strength of Seal (N) | | | | |
|---|---|---|---|---|---|
| Sealing Temp (°C) | 60wt% LLDPE/ 40wt% sPP | Random PP | 85wt% Random PP/15wt% sPP | 65wt% Random PP/35wt% sPP | 35wt% Random PP/65wt% sPP |
| 120 | 0 | 0 | 0 | 0 | 0 |
| 125 | 6 | 0 | 0 | 0 | 0 |
| 130 | 10 | 0 | 0 | 0 | 6 |
| 135 | 21 | 12 | 0 | 0 | 8 |
| 140 | 22 | 12 | 0 | 0 | 15 |
| 145 | 23 | 6 | 0 | 0 | 22 |

| | | | | | |
|---|---|---|---|---|---|
| 0 = peelable seal (i.e. Tensile Strength = 0-3N) | | | | | |

**TABLE 4 Seal Strength of 80wt% LLDPE/20wt% sPP with second material**

| | Tensile Strength of Seal (N) | | | |
|---|---|---|---|---|
| Sealing Temp (°C) | 80wt% LLDPE/20wt% sPP | Random PP | 65wt% Random PP/35wt% sPP | 35wt% Random PP/65wt% sPP |
| 120 | - | 0 | 0 | 0 |
| 125 | - | 0 | 0 | 0 |
| 130 | 0 | 0 | 0 | 0 |
| 135 | 19 | 0 | 0 | 0 |
| 140 | 20 | 0 | 0 | 0 |
| 145 | 21 | 0 | 0 | 11 |

| | | | | |
|---|---|---|---|---|
| 0 = peelable seal (i.e. Tensile Strength = 0-3N) - = no seal made | | | | |

**TABLE 5**

| | Tensile Strength of Seal (N) | | | |
|---|---|---|---|---|
| Sealing Temp (°C) | Random PP + Random PP | 85wt% Random PP/15wt% sPP + 85wt% Random PP/15wt% sPP | 65wt% Random PP/35wt% sPP + 65wt% Random PP/35wt% sPP | 35wt% Random PP/65wt% sPP + 35wt% Random PP/65wt% sPP |
| 120 | - | - | 0 | - |
| 125 | - | - | 3 | - |
| 130 | - | 0 | 14 | 0 |
| 135 | 0 | 17 | 28 | 29 |
| 140 | 24 | 34 | 30 | 30 |
| 145 | 37 | 35 | 34 | 32 |

| | | | | |
|---|---|---|---|---|
| 0 = peelable seal - = no seal made | | | | |

**TABLE 6**

| Material | Haze % | Gloss % | Thickness (µm) |
|---|---|---|---|
| LLDPE | 6.8 | 22.8 | 111 |
| 60wt% LLDPE/40wt% sPP | 30.8 | 21.5 | 115 |
| 80wt% LLDPE/20wt% sPP | 19.3 | 41.9 | 111 |
| Random PP | 15 | 58.6 | 104 |
| 85wt% Random PP/ 15wt% sPP | 26 | 47.4 | 106 |
| 65wt% Random PP/ 35wt% sPP | 11.2 | 50.7 | 112 |
| 35wt% Random PP/ 65wt% sPP | 9.2 | 52.4 | 112 |

## Claims

1. A method of sealing together polyolefin elements, the method comprising providing a first element including a polyethylene and a second element including an isotactic polypropylene, and at least one of the first and second elements further including from 25 to 75 wt% syndiotactic polypropylene, and heat sealing the first and second elements together.

2. A method according to claim 1 wherein the first element is composed of a blend of from 25 to 75 wt% polyethylene and from 75 to 25 wt% syndiotactic polypropylene and the second element is composed of isotactic polypropylene.

3. A method according to claim 1 wherein the first element is composed of polyethylene and the second element is composed of a blend of from 25 to 75 wt% isotactic polypropylene and from 75 to 25 wt% syndiotactic polypropylene.

4. A method according to claim 1 wherein the first element is composed of a blend of from 25 to 75 wt% polyethylene and from 75 to 25 wt% syndiotactic polypropylene and a second element is composed of a blend of from 25 to 75 wt% isotactic polypropylene and from 75 to 25 wt% syndiotactic polypropylene.

5. A method according to any foregoing claim wherein the first and second elements form a packaging when sealed together.

6. A method according to any foregoing claim wherein the first and second elements comprise, in either order, a container body and a closure for the container body.

7. A method according to any one of claims 1 to 5 wherein the first and second elements comprise a flexible pouch.

8. A method according to claim 7 wherein the flexible pouch has at least two heat seals of different seal strength, the at least two heat seals comprising a first peripheral heat seal around the pouch and a second internal heat seal separating two compartments in the pouch, the second heat seal being weaker than the first heat seal and being rupturable for connecting to two compartments together.

9. A method according to claim 8 wherein the first heat seal is formed at a higher sealing temperature than that of the second heat seal.

10. A method according to any one of claims 1 to 4 wherein the first and second elements are films which are heat sealed together to form a multi-layer film.

11. A method according to claim 10 wherein the films are heat sealed together by co-extrusion.

12. A package comprising a container body and a closure for the container body and heat sealed thereto, the container body including a polyethylene or an isotactic polypropylene and the closure including the other of a polyethylene or an isotactic polypropylene, and at least one of the body and closure further including from 25 to 75 wt% syndiotactic polypropylene.

13. A multi-layer film prepared comprising at least one first film of polyethylene heat sealed to at least one second film including isotactic polypropylene, at least one of the first and second films further including from 25 to 75 wt% of syndiotactic polypropylene.

14. A multi-layer film according to claim 13 wherein the films are heat sealed by co-extrusion.

15. A multi-layer film according to claim 13 or claim 14 wherein the second film is a blend of from 75 to 60 wt% isotactic polypropylene and from 25 to 40 wt% syndiotactic polypropylene.

16. A multi-layer film according to any one of claims 13 to 15 wherein two of the first films are heat sealed to opposed surfaces of the second film so as to form opposed coating layers there for.

17. Use of syndiotactic polypropylene as a heat seal promoter between polyethylene and polypropylene elements heat sealed together.

## Patentansprüche

1. Verfahren zum Aneinandersiegeln von Polyolefinelementen, wobei das Verfahren das Bereitstellen eines ersten Elements, das ein Polyethylen beinhaltet, und eines zweiten Elements, das ein isotaktisches Polypropylen beinhaltet, und wobei mindestens eines des ersten und des zweiten Elements weiter 25 bis 75 Gew. % syndiotaktisches Polypropylen umfasst, und das Aneinander-Heißsiegeln des ersten und des zweiten Elements umfasst.

2. Verfahren nach Anspruch 1, wobei das erste Element aus einem Gemisch von 25 bis 75 Gew. % Polyethylen und 75 bis 25 Gew. % syndiotaktischem Polypropylen zusammengesetzt ist und das zweite Element aus isotaktischem Polypropylen zusammengesetzt ist.

3. Verfahren nach Anspruch 1, wobei das erste Element aus Polyethylen zusammengesetzt ist und das zweite Element aus einem Gemisch von 25 bis 75 Gew. % isotaktischem Polypropylen und 75 bis 25 Gew. % syndiotaktischem Polypropylen zusammengesetzt ist.

4. Verfahren nach Anspruch 1, wobei das erste Element aus einem Gemisch von 25 bis 75 Gew. % Polyethylen und 75 bis 25 Gew. % syndiotaktischem Polypropylen zusammengesetzt ist und ein zweites Element aus einem Gemisch von 25 bis 75 Gew. % isotaktischem Polypropylen und 75 bis 25 Gew. % syndiotaktischem Polypropylen zusammengesetzt ist.

5. Verfahren nach gleich welchem vorgenannten Anspruch, wobei das erste und das zweite Element eine Verpackung bilden, wenn sie aneinandergesiegelt sind.

6. Verfahren nach gleich welchem vorgenannten Anspruch, wobei das erste und das zweite Element, in gleich welcher Abfolge, einen Behälterkörper und einen Verschluss für den Behälterkörper umfassen.

7. Verfahren nach einem der Ansprüche 1 bis 5, wobei das erste und das zweite Element einen flexiblen Beutel umfassen.

8. Verfahren nach Anspruch 7, wobei der flexible Beutel mindestens zwei Heißsiegel von unterschiedlicher Siegelkraft aufweist, wobei die mindestens zwei Heißsiegel ein erstes Außenumfangs-Heißsiegel um den Beutel herum und ein zweites inneres Heißsiegel, das zwei Fächer in den Beutel abtrennt, umfassen, wobei das zweite Heißsiegel schwächer als das erste Heißsiegel ist und zerreißbar ist, um die zwei Fächer miteinander zu verbinden.

9. Verfahren nach Anspruch 8, wobei das erste Heißsiegel bei einer höheren Siegeltemperatur als der des zweiten Heißsiegels gebildet wird.

10. Verfahren nach einem der Ansprüche 1 bis 4, wobei das erste und das zweite Element Folien sind, die aneinander heißgesiegelt werden, um eine Mehrschichtfolie zu bilden.

11. Verfahren nach Anspruch 10, wobei die Folien durch Coextrusion aneinander heißgesiegelt werden.

12. Verpackung, umfassend einen Behälterkörper und einen Verschluss für den Behälterkörper und daran heißgesiegelt, wobei der Behälterkörper ein Polyethylen oder ein isotaktisches Polypropylen beinhaltet und der Verschluss das andere eines Polyethylens oder eines isotaktischen Polypropylens beinhaltet, und mindestens eines des Körpers und des Verschlusses weiter 25 bis 75 Gew. % syndiotaktisches Polypropylen beinhaltet.

13. Mehrschichtfolie, hergestellt, sodass sie mindestens eine erste Folie aus Polyethylen, heißgesiegelt an mindestens eine zweite Folie, die isotaktisches Polypropylen beinhaltet, umfasst, wobei mindestens eine der ersten und der zweiten Folie weiter 25 bis 75 Gew. % syndiotaktisches Polypropylen beinhaltet.

14. Mehrschichtfolie nach Anspruch 13, wobei die Folien durch Coextrusion heißgesiegelt sind.

15. Mehrschichtfolie nach Anspruch 13 oder Anspruch 14, wobei die zweite Folie ein Gemisch von 75 bis 60 Gew. % isotaktisches Polypropylen und 25 bis 40 Gew. % syndiotaktisches Polypropylen ist.

16. Mehrschichtfolie nach einem der Ansprüche 13 bis 15, wobei zwei der ersten Folien an entgegengesetzte Oberflächen der zweiten Folie heißgesiegelt sind, um entgegengesetzte Beschichtungslagen dafür zu bilden.

17. Verwendung von syndiotaktischem Polypropylen als Heißsiegel-Promotor zwischen aneinander heißgesiegelten Polyethylen- und Polypropylenelementen.

## Revendications

1. Procédé pour le soudage réciproque d'éléments en polyoléfines, le procédé comprenant le fait de procurer un premier élément englobant un polyéthylène et un deuxième élément englobant un polypropylène isotactique, au moins un élément parmi lesdits premier et deuxième éléments englobant en outre du polypropylène syndiotactique à concurrence de 25 à 75 % en poids, et le fait de thermosouder les premier et deuxième éléments l'un à l'autre.

2. Procédé selon la revendication 1, dans lequel le premier élément se compose d'un mélange de polyéthylène à concurrence de 25 à 75 % en poids et de polypropylène syndiotactique à concurrence de 75 à 25 % en poids, le deuxième élément étant composé de polypropylène isotactique.

3. Procédé selon la revendication 1, dans lequel le premier élément se compose de polyéthylène et le deuxième élément se compose d'un mélange de polyéthylène à concurrence de 25 à 75 % en poids et de polypropylène syndiotactique à concurrence de 75 à 25 % en poids.

4. Procédé selon la revendication 1, dans lequel le premier élément se compose d'un mélange de polyéthylène à concurrence de 25 à 75 % en poids et de polypropylène syndiotactique à concurrence de 75 à 25 % en poids et le deuxième élément se compose d'un mélange de polypropylène isotactique à concurrence de 25 à 75 % en poids et de polypropylène syndiotactique à concurrence de 75 à 25 % en poids.

5. Procédé selon l'une quelconque des revendications précédentes, dans lequel les premier et deuxième éléments forment un conditionnement lorsqu'ils sont soudés l'un à l'autre.

6. Procédé selon l'une quelconque des revendications précédentes, dans lequel les premier et deuxième éléments comprennent, dans n'importe quel ordre, un corps faisant office de récipient et une fermeture pour le corps faisant office de récipient.

7. Procédé selon l'une quelconque des revendications 1 à 5, dans lequel les premier et deuxième éléments comprennent une poche souple.

8. Procédé selon la revendication 7, dans lequel la poche souple possède au moins deux joints d'étanchéité possédant un pouvoir de scellement différent, lesdits au moins deux joints d'étanchéité comprenant un premier joint d'étanchéité périphérique autour de la poche et un deuxième joint d'étanchéité interne séparant deux compartiments dans la poche, le deuxième joint d'étanchéité étant plus faible que le premier joint d'étanchéité et pouvant être rompu pour relier les deux compartiments l'un à l'autre.

9. Procédé selon la revendication 8, dans lequel le premier joint d'étanchéité est réalisé à une température de thermosoudage supérieure à celle du deuxième joint d'étanchéité.

10. Procédé selon l'une quelconque des revendications 1 à 4, dans lequel les premier et deuxième éléments sont des films qui sont thermosoudés l'un à l'autre pour former un film multicouche.

11. Procédé selon la revendication 10, dans lequel les films sont thermosoudés l'un à l'autre par coextrusion.

12. Conditionnement comprenant un corps faisant office de récipient et une fermeture pour le corps faisant office de récipient, thermosoudée à ce dernier, le corps faisant office de récipient englobant un polyéthylène ou un polypropylène isotactique et la fermeture englobant à l'inverse un polypropylène isotactique ou un polyéthylène, au moins un des deux éléments, à savoir le corps ou la fermeture, englobant en outre du polypropylène syndiotactique à concurrence de 25 à 75 % en poids.

13. Film multicouche préparé comprenant au moins un premier film de polyéthylène thermosoudé à au moins un deuxième film englobant du polypropylène isotactique, au moins un film parmi le premier et le deuxième film englobant en outre du polypropylène syndiotactique à concurrence de 25 à 75 % en poids.

14. Film multicouche selon la revendication 13, dans lequel les films sont thermosoudés par coextrusion.

15. Film multicouche selon la revendication 13 ou 14, dans lequel le deuxième film est un mélange de polypropylène isotactique à concurrence de 75 à 60 % en poids et de polypropylène syndiotactique à concurrence de 25 à 40 % en poids.

16. Film multicouche selon au moins une des revendications 13 à 15, dans lequel deux premiers films sont thermosoudés à des surfaces opposées du deuxième film de façon à former des couches de revêtement opposées pour ce dernier.

17. Utilisation d'un polypropylène syndiotactique comme promoteur de thermosoudage entre des éléments de polyéthylène et de polypropylène thermosoudés l'un à l'autre.
